(19) **Europäisches Patentamt**

**European Patent Office**

**Office européen des brevets**

(11) Veröffentlichungsnummer : **0 358 922 B1**

(12) # EUROPÄISCHE PATENTSCHRIFT

(45) Veröffentlichungstag der Patentschrift :
27.12.91 Patentblatt 91/52

(51) Int. Cl.⁵ : **F02M 51/08**

(21) Anmeldenummer : **89114331.5**

(22) Anmeldetag : **03.08.89**

(54) Elektromagnetisch betätigbares Ventil.

(30) Priorität : **14.09.88 DE 3831196**

(43) Veröffentlichungstag der Anmeldung :
**21.03.90 Patentblatt 90/12**

(45) Bekanntmachung des Hinweises auf die
Patenterteilung :
**27.12.91 Patentblatt 91/52**

(84) Benannte Vertragsstaaten :
**AT DE ES FR GB IT**

(56) Entgegenhaltungen :
**DE-A- 3 120 160**
**DE-A- 3 244 290**
**DE-A-34 275 526**
**US-A- 2 157 480**

(73) Patentinhaber : **ROBERT BOSCH GmbH**
**Postfach 10 60 50**
**W-7000 Stuttgart 10 (DE)**

(72) Erfinder : **Babitzka, Rudolf, Dipl.-Ing.(FH)**
**Birkenweg 11**
**W-7141 Kirchberg-Neuhof (DE)**
Erfinder : **Reiter, Ferdinand, Dipl.-Ing.(BA)**
**Burgweg 1**
**W 7141 Markgröningen 2 (DE)**

## Beschreibung

### Stand der Technik

Die Erfindung geht aus von einem elektromagnetisch betätigbaren Ventil nach der Gattung des Hauptanspruchs. Es ist schon ein derartiges elektromagnetisch betätigbares Ventil vorgeschlagen worden (DE-A-3244290), bei dem zwar zwischen einem Anker und einer als Ventilschließglied dienenden Kugel ein Verbindungsrohr vorgesehen ist, jedoch muß der Durchmesser des Verbindungsrohres relativ genau hergestellt sein, damit der Anker darauf geschoben und an diesem befestigt werden kann, und in der Nähe der Kugel sind mehrere die Wandung des Verbindungsrohres radial durchdringende Strömungsöffnungen vorgesehen, durch die der vom Anker im Inneren zuströmende Kraftstoff zum Ventilsitz gelangen kann. Zur Herstellung der Strömungsöffnungen sind zusätzliche Arbeitsgänge erforderlich.

### Vorteile der Erfindung

Das erfindungsgemäße elektromagnetisch betätigbare Ventil mit den kennzeichnenden Merkmalen des Hauptanspruchs hat demgegenüber den Vorteil einer leichten Herstellbarkeit und einer einfachen Montage des Verbindungsrohres mit relativ groben Toleranzen, bei geringstem Gewicht und größter Stabilität sowie großflächigem hydraulischen Strömungsquerschnitt. Infolge des sich über die gesamte Länge erstreckenden Schlitzes ist das Verbindungsrohr federelastisch, wodurch die Verbindung mit dem Anker und dem Ventilschließglied erleichtert wird. Das Verbindungsrohr kann nicht nur durch Verwendung eines handelsüblichen dünnwandigen Rohres hergestellt werden, indem der Schlitz durch Sägen, Fräsen oder ähnliches hergestellt wird, sondern auch durch Verwendung eines beispielsweise rechteckförmigen Bleches, das derart in Form eines Rohres gerollt bzw. gebogen wird, das zwischen den in Längsrichtung verlaufenden Stirnflächen des Bleches der Schlitz gebildet wird. Der Schlitz des aus unmagnetischem Material gefertigten Verbindungsrohres vermeidet außerdem eine unerwünschte Wirbelstrombildung.

Durch die in den Unteransprüchen aufgeführten Maßnahmen sind vorteilhafte Weiterbildungen und Verbesserungen des im Hauptanspruch angegebenen Ventiles möglich.

Besonders vorteilhaft ist es, das Verbindungsrohr aus Blech zu fertigen, indem etwa rechteckförmige Blechabschnitte gerollt oder derart gebogen werden, daß sich das mit einem Schlitz in Längsrichtung versehene Verbindungsrohr ergibt.

Vorteilhaft ist ebenfalls im Verbindungsrohr einen geneigten Schlitz vorzusehen, der sich beispielsweise dadurch erreichen läßt, daß zur Herstellung des Verbindungsrohres ein Blechabschnitt in Form eines Parallelogrammes verwendet wird.

Ebenfalls vorteilhaft ist es, die Rohrwand des Verbindungsrohres mit mehreren sie durchdringenden Strömungsöffnungen zu versehen, um eine unerwünschte Beeinflussung des abgespritzten Kraftstoffes durch die Strömungsverhältnisse im Ventil zu vermeiden.

### Zeichnung

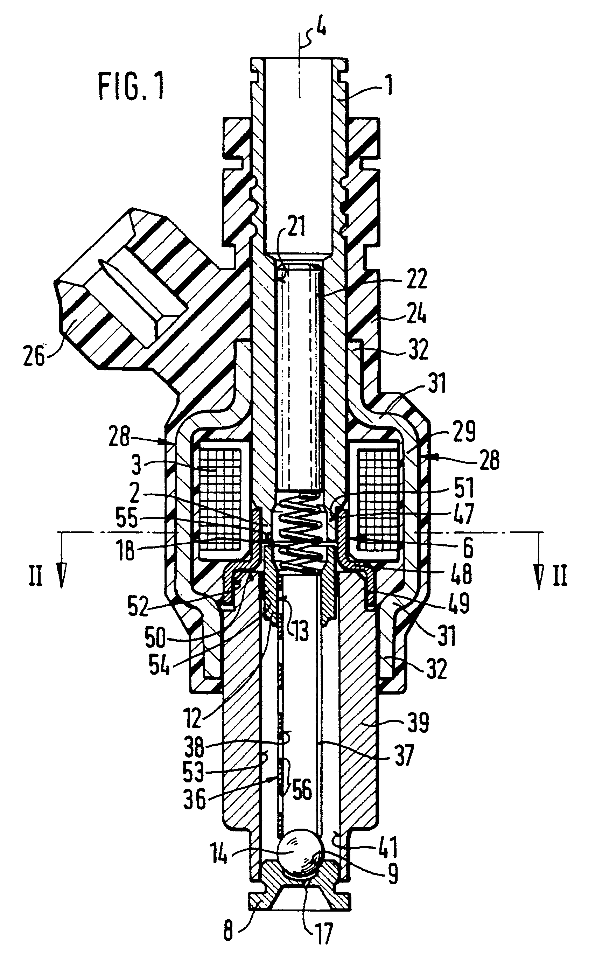

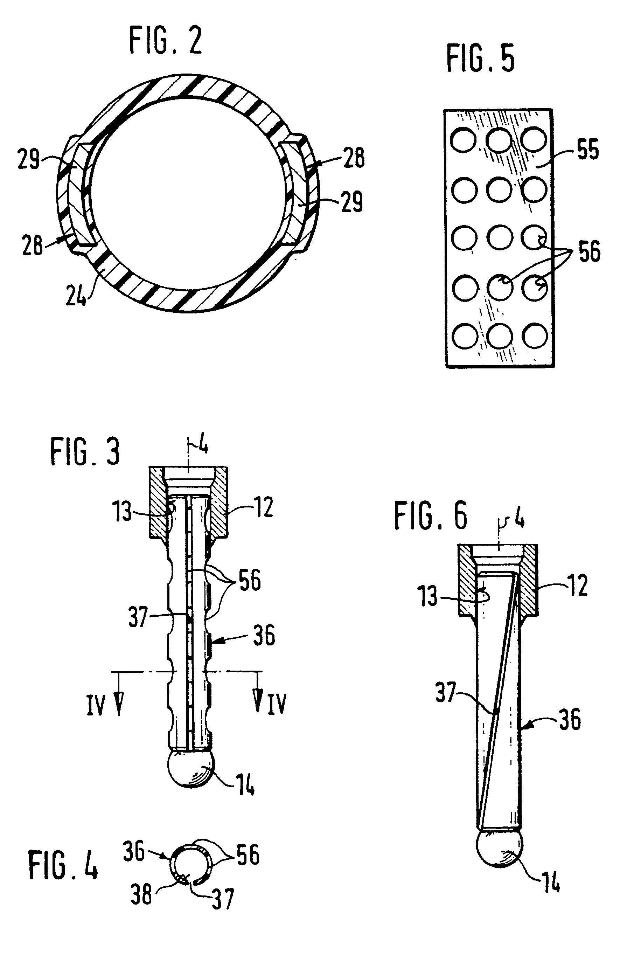

Ausführungsbeispiele der Erfindung sind in der Zeichnung vereinfacht dargestellt und in der nachfolgenden Beschreibung näher erläutert. Es zeigen Figur 1 ein erstes Ausführungsbeispiel eines erfindungsgemäß ausgestalteten Ventils, Figur 2 einen Schnitt entlang der Linie II-II in Figur 1, Figur 3 ein Verbindungsrohr nach Figur 1 mit Anker und Ventilschließglied, Figur 4 einen Schnitt entlang der Linie IV-IV, Figur 5 ein mit Strömungsöffnungen versehener Blechabschnitt zur Bildung eines Verbindungsrohres, Figur 6 ein zweites Ausführungsbeispiel eines Verbindungsrohres mit einem Anker und einem Ventilschließglied.

### Beschreibung der Ausführungsbeispiele

Das in der Figur 1 beispielsweise dargestellte elektromagnetisch betätigbare Ventil in Form eines Einspritzventiles für Kraftstoff als Aggregat einer Kraftstoffeinspritzanlage einer gemischverdichtenden fremdgezündeten Brennkraftmaschine hat einen rohrförmigen metallenen Anschlußstutzen 1 aus ferromagnetischem Material, auf dessen unterem Kernende 2 eine Magnetspule 3 angeordnet ist. Der Anschlußstutzen 1 dient somit zugleich als Kern. Anschließend an das Kernende 2 des Anschlußstutzens 1 ist konzentrisch zur Ventillängsachse 4 dicht mit dem Anschlußstutzen 1 ein Zwischenteil 6 verbunden, beispielsweise durch Verlöten oder Verschweißen. Das Zwischenteil 6 ist aus nichtmagnetischem Blech gefertigt, das tiefgezogen ist und koaxial zur Ventillängsachse 4 verlaufend einen ersten Verbindungsabschnitt 47 hat, mit dem es vollständig das Kernende 2 umgreift und mit diesem dicht verbunden ist. Ein sich vom ersten Verbindungsabschnitt 47 radial nach außen erstreckender Kragen 48 führt zu einem zweiten Verbindungsabschnitt 49 des Zwischenteiles 6, der sich koaxial zur Ventillängsachse 4 verlaufend erstreckt und in axialer Richtung ein Verbindungsteil 39 teilweise überragt und mit diesem dicht verbunden ist, beispielsweise durch Verlöten oder Verschweißen. Der Durchmesser des zweiten Verbindungsabschnittes 49 ist somit größer als der Durchmesser des ersten Verbindungsabschnittes 47, so daß im montierten Zustand das rohrförmige Verbindungsteil 39 mit einer Stirnfläche 50 am Kragen 48 anliegt. Um kleine Außenmaße des Ventiles zu ermöglichen, umgreift der erste Verbindungsabschnitt 47 einen Halteabsatz 51 des Kernendes 2, der einen geringeren Durchmesser als der Anschlußstutzen 1 hat, und der zweite Verbindungsabschnitt 49 umgreift einen ebenfalls mit geringerem Durchmesser als im angrenzenden Bereich ausgebildeten Halteabsatz 52 des Verbindungsteiles 39.

Das aus ferromagnetischem Material gefertigte Verbindungsteil 39 hat der Stirnfläche 50 abgewandt eine Haltebohrung 41, in die ein Ventilsitzkörper 8 dicht eingesetzt ist, beispielsweise durch eine Verschraubung, Verschweißung oder Verlötung. Die Haltebohrung 41 geht in eine Übergangsbohrung 53 über, an die sich in der Nähe der Stirnfläche 50 eine Gleitbohrung 54 anschließt, in die ein zylindrischer Anker 12 ragt und durch die der Anker 12 geführt wird. Somit können Haltebohrung 41 und Gleitbohrung 54 in einer Aufspannung bei der Fertigung hergestellt werden, so daß sich sehr genau zueinander fluchtende Bohrungen ergeben. Der Anker 12 wird weder durch das Zwischenteil 6 noch die Übergangsbohrung 53 des Verbindungsteiles 39 geführt. Die axiale Erstreckung der Gleitbohrung 54 ist im Vergleich zur axialen Länge des Ankers 12 gering, sie beträgt etwa 1/15 der Länge des Ankers. Am Kernende 2 des Anschlußstutzens 1 ist dem Anker 12 zugewandt ein ringförmiger, schmaler Anschlagbund 55 ausgebildet, dessen Breite etwa 0,2 mm beträgt.

Dem Anschlußstutzen 1 abgewandt weist der metallene Ventilsitzkörper 8 dem Kernende 2 des Anschlußstutzens 1 zugewandt einen festen Ventilsitz 9 auf. Die Aneinanderreihung von Anschlußstutzen 1, Zwischenteil 6, Verbindungsteil 39 und Ventilsitzkörper 8 stellt eine starre metallene Einheit dar. In eine Befestigungsöffnung 13 des Ankers 12 ist ein Ende eines in die Übergangsbohrung 53 ragenden dünnwandigen runden Verbindungsrohres 36 eingesetzt sowie mit diesem verbunden und mit dessen dem Ventilsitz 9 zugewandten anderen Ende ist ein Ventilschließglied 14 verbunden, das beispielsweise die Form einer Kugel, einer Halbkugel oder eine andere Form haben kann.

Dem Ventilschließglied 14 abgewandt ragt in die den Anker 12 durchdringende abgestufte Befestigungsöffnung 13 eine Rückstellfeder 18, die sich beispielsweise mit ihrem einen Ende an einer Stirnfläche des Verbindungsrohres 36 abstützt. Das andere Ende der Rückstellfeder 18 ragt in eine Strömungsbohrung 21 des Anschlußstutzens 1 und liegt dort an einer rohrförmigen Verstellbuchse 22 an, die zur Einstellung der Federspannung beispielsweise in die Strömungsbohrung 21 eingeschraubt oder eingepreßt ist. Mindestens ein Teil des Anschlußstutzens 1 und die Magnetspule 3 in ihrer gesamten axialen Länge sind durch eine Kunststoffummantelung 24 umschlossen, die auch wenigstens noch einen Teil des Zwischenteils 6 und des Verbindungsrohres 36 umschließt. Die Kunststoffummantelung 24 kann durch Ausgießen oder Umspritzen mit Kunststoff erzielt werden. An der Kunststoffummantelung 24 ist zugleich ein elektrischer Anschlußstecker 26 angeformt, über den die elektrische Kontaktierung der Magnetspule 3 und damit deren Erregung erfolgt.

Die Magnetspule 3 ist von wenigstens einem als ferromagnetisches Element zur Führung der Magnetfeldlinien dienenden Leitelement 28 umgeben, das aus ferromagnetischem Material hergestellt ist und sich in axialer Richtung über die gesamte Länge der Magnetspule 3 erstreckt und die Magnetspule 3 in Umfangsrichtung wenigstens teilweise umgibt.

Das Leitelement 28 ist in Form eines Bügels ausgebildet, mit einem an die Kontur der Magnetspule angepaßten gewölbten Mittelbereich 29, der nur teilweise in Umfangsrichtung die Magnetspule 3 umgibt und sich in radialer Richtung nach innen erstreckende Endabschnitte 31 hat, die den Anschlußstutzen 1 und andererseits das Verbindungsteil 39 teilweise umgreifend in jeweils ein in axialer Richtung verlaufendes Schalenende 32 übergehen. In Figur 1 und Figur 2 ist ein Ventil mit zwei Leitelementen 28 dargestellt.

In der Rohrwand des Verbindungsrohres 36 ist ein die Rohrwand radial durchdringender Schlitz 37 vorgesehen, der sich über die gesamte Länge des Verbindungsrohres 36 erstreckt und durch den der vom Anker 12 in einen Innenkanal 38 des Verbindungsrohres 36 zuströmende Kraftstoff in die Übergangsbohrung 53 und von dort, zum Ventilsitz 9 gelangen kann, stromabwärts dessen im Ventilsitzkörper 8 wenigstens eine Abspritzöffnung 17 ausgebildet ist, über die der Kraftstoff in ein Saugrohr oder einen Zylinder einer Brennkraftmaschine abgespritzt wird.

Bei dem Ausführungsbeispiel nach Figur 1 sind zwei Leitelemente 28 vorgesehen, die entsprechend der Darstellung in Figur 2 einander gegenüberliegend angeordnet sein können. Es kann auch aus räumlichen Gründen zweckmäßig sein, den elektrischen Anschlußstecker 26 in einer Ebene verlaufen zu lassen, die um 90° verdreht ist, also senkrecht auf einer Ebene durch die Leitelemente 28 steht.

In den Figuren 3 und 4 ist das bereits in Figur 1 dargestellte Verbindungsrohr 36 mit dem an dessen einem Ende befestigten Anker 12 und dem mit dessen anderem Ende verbundenen Ventilschließglied 14 für sich dargestellt. Die Verbindung zwischen Verbindungsrohr 36 und Anker 12 sowie Ventilschließglied 14 erfolgt in vorteilhafter Weise durch Verschweißen bzw. Verlöten. Der die Rohrwand vom Innenkanal 38 nach außen durchdringende Schlitz 37 verläuft bei diesem Ausführungsbeispiel in einer durch die Ventillängsachse 4 gehenden Ebene von einem zum anderen Ende des Verbindungsrohres 36. Der Schlitz 37 stellt dabei einen großflächigen hydraulischen Strömungsquerschnitt dar, über den der Kraftstoff sehr schnell aus dem Innenkanal 38 in die Übergangsbohrung 53 und damit zum Ventilsitz 9 gelangen kann.

Das dünnwandige Verbindungsrohr 36 gewährleistet bei geringstem Gewicht größte Stabilität. Hergestellt werden kann ein erfindungsgemäß ausgebildetes Verbindungsrohr 36, indem von einem handelsüblichen Rohr einzelne Verbindungsrohre entsprechend der erforderlichen Länge abgetrennt werden und anschließend in Längsrichtung von einem Ende zum anderen Ende der Schlitz 37 hergestellt wird, beispielsweise durch Fräsen, Sägen, Schneiden oder ähnliches. Der Schlitz 37 kann dabei auch so hergestellt werden, daß er geneigt gegenüber der Ventillängsachse 4 verläuft, wie es das Ausführungsbeispiel nach Figur 6 zeigt. Der geneigte Schlitz 37 ermöglicht eine gleichmäßige Verteilung des ausströmenden Kraftstoffes in die Übergangsbohrung 53.

Die Herstellung des Verbindungsrohres 36 kann jedoch auch derart erfolgen, daß aus einem die Dicke der Rohrwandung aufweisenden Metallblech Blechabschnitte 55, wie einer in Figur 5 dargestellt ist, mit rechteckiger Form beispielsweise durch Stanzen hergestellt werden, deren eine Seitenlängen der Länge des herzustellenden Verbindungsrohres 36 in axialer Richtung und deren andere Seitenlängen etwa dem Umfang des herzustellenden Verbindungsrohres entsprechen. Danach wird jeder Blechabschnitt etwa unter Zuhilfenahme eines Dornes in die Form des gewünschten Verbindungsrohres 36 gerollt bzw. gebogen. Dabei bilden die beiden in Längsrichtung verlaufenden Stirnflächen des das Verbindungsrohr 36 bildenden Blechabschnittes den Schlitz 37, indem sie mit Abstand einander gegenüberliegen. Um eine unerwünschte Beeinflussung der Strahlform des aus der Abspritzöffnung 17 abgespritzten Kraftstoffes durch den zum Ventilsitz 9 eventuell unsymmetrisch strömenden Kraftstoff zu vermeiden ist es vorteilhaft, das Verbindungsrohr 36 mit mehreren Strömungsöffnungen 56 zu versehen, die etwa symmetrisch, auch in axialer Richtung, verteilt die Rohrwand des Verbindungsrohres 36 durchdringen. Der in Figur 5 dargestellte Blechabschnitt 55 weist als Beispiel in horizontaler Rich tung drei und in vertikaler Richtung fünf Strömungsöffnungen 56 auf. Entweder werden die Strömungsöffnungen 56 dadurch erhalten, daß die Blechabschnitte 55 aus bereits perforierten Blechen hergestellt werden, oder die Strömungsöffnungen 56 werden zugleich mit der Herstellung der Blechabschnitte 55 erzeugt. Die Strömungsöffnungen 56 können so verlaufen, daß der in die Übergangsbohrung 53 austretende Kraftstoff radial austritt oder einen Drall aufgeprägt erhält. Dabei können die Strömungsöffnungen 56 auch in Richtung zum Ventilsitz 9 hin geneigt verlaufen.

Zur Bildung eines geneigten Schlitzes 37 nach dem Ausführungsbeispiel entsprechend Figur 6 kann ein Blechabschnitt in Form eines Parallelogrammes gewählt werden.

Die Fertigung des Verbindungsrohres 36 aus einem Blechabschnitt stellt eine besonders leichte und einfache Herstellungsart dar, die auch den Einsatz verschiedenster Materialen ermöglicht. Durch das Vorsehen des Schlitzes 37 im Verbindungsrohr 36 ist das Verbindungsrohr federelastisch, so daß für die Befestigungsöffnung 13 des Ankers 12, das Verbindungsrohr 36 selbst und auch das Ventilschließglied 14 relativ grobe Toleranzen gewählt werden können, da durch die federelastische Nachgiebigkeit das Verbindungsrohr 36 mit seinem Ende jeweils unter Spannung in die Befestigungsöffnung 13 des Ankers 12 einschiebbar ist, wodurch sich auch die Montage erleichtert.

**Patentansprüche**

1. Elektromagnetisch betätigbares Ventil, insbesondere Kraftstoffeinspritzventil für Kraftstoffeinspritzanlagen von gemischverdichtenden fremdgezündeten Brennkraftmaschinen mit einem Kern (1, 2), den eine Magnetspule (3) umgibt, und einem dem Kern zugewandten Anker (12) sowie einem Verbindungsrohr (36) mit einer Rohrwand, das konzentrisch zu einer Ventillängsachse angeordnet an seinem einen Ende mit dem Anker und an seinem anderen Ende mit einem Ventilschließglied (14) verbunden ist, das mit einem festen Ventilsitz (9) zusammenwirkt, dadurch gekennzeichnet, daß das Verbindungsrohr (36) über seine gesamte Länge mit einem die Rohrwand durchdringenden Schlitz (37) versehen ist.

2. Ventil nach Anspruch 1, dadurch gekennzeichnet, daß der Schlitz (37) im Verbindungsrohr (36) in einer durch die Ventillängsachse (4) gehenden Ebene verläuft.

3. Ventil nach Anspruch 1, dadurch gekennzeichnet, daß der Schlitz (37) im Verbindungsrohr (36) geneigt gegenüber der Ventillängsachse (4) verläuft.

4. Ventil nach einem der Ansprüche 2 oder 3, dadurch gekennzeichnet, daß das Verbindungsrohr (36) aus Blech ausgebildet ist.

5. Ventil nach Anspruch 4, dadurch gekennzeichnet, daß die Rohrwand des Verbindungsrohres (36) mit mehreren sie durchdringenden Strömungsöffnungen (56) versehen ist.

6. Ventil nach Anspruch 1, dadurch gekennzeichnet, daß der Anker (12) zylindrisch ausgebildet ist und eine Befestigungsöffnung (13) hat, in die das eine Ende des Verbindungsrohres (36) ragt, mit dem der Anker (12) verbunden ist.

7. Ventil nach Anspruch 1, dadurch gekennzeichnet, daß das Ventilschließglied (14) kugelförmig ausgebildet und mit dem anderen Ende des Verbindungsrohres (36) verbunden ist.

## Claims

1. Electromagnetically actuable valve, especially fuel-injection valve for fuel-injection systems of mixture-compressing spark-ignition internal-combustion engines, with a core (1, 2) surrounding a magnet coil (3), and with an armature (12) facing the core as well as with a connecting tube (36) having a tube wall and, arranged concentrically relative to a valve longitudinal axis, being connected at one end to the armature and at its other end to a valve-closing member (14) interacting with a fixed valve seat (9), characterised in that the connecting tube (36) is provided over its entire length with a slot (37) passing through the tube wall.

2. Valve according to Claim 1, characterised in that the slot (37) in the connecting tube (36) extends in a plane passing through the valve longitudinal axis (4).

3. Valve according to Claim 1, characterised in that the slot (37) in the connecting tube (36) extends at an inclination relative to the valve longitudinal axis (4).

4. Valve according to one of Claims 2 or 3, characterised in that the connecting tube (36) is produced from sheet metal.

5. Valve according to Claim 4, characterised in that the tube wall of the connecting tube (36) is provided with a plurality of flow orifices (56) passing through it.

6. Valve according to Claim 1, characterised in that the armature (12) is made cylindrical and has a fastening orifice (13), into which projects one end of the connecting tube (36), to which the armature (12) is connected.

7. Valve according to Claim 1, characterised in that the valve-closing member (14) is made spherical and is connected to the other end of the connecting tube (36).

## Revendications

1. Soupape électromagnétique, notamment injecteur de carburant pour des installations d'injection de carburant de moteurs à combustion interne à compression de mélange et à allumage par un appareillage externe, avec un noyau (1, 2) qu'entoure une bobine magnétique (3), et une armature (12) tournée vers le noyau ainsi qu'un tube de liaison (36), qui disposé concentriquement par rapport à un axe longitudinal de la soupape, est relie à une de ses extrémités avec l'armature et à son autre extrémité avec un organe de fermeture de soupape (14), qui coopère avec un siège de soupape fixe (9), soupape électromagnétique caractérisée en ce que le tube de liaison (36) est munie sur toute sa longueur d'une fente (37) traversant la paroi du tube.

2. Soupape selon la revendication 1, caractérisée en ce que la fente (37) dans le tube de liaison (36) s'étend dans un plan passant par l'axe longitudinal (4) de la soupape.

3. Soupape selon la revendication 1, caractérisée en ce que la fente (37) dans le tube de liaison (36) est inclinée par rapport à l'axe longitudinal (4) de la soupape.

4. Soupape selon une des revendications 2 ou 3, caractérisée en ce que le tube de liaison (36) est réalisé en tôle.

5. Soupape selon la revendication 4, caractérisé en ce que la paroi du tube de liaison (36) est munie de plusieurs orifices d'écoulement (56) la traversant.

6. Soupape selon la revendication 1, caractérisée en ce que l'armature (12) est cylindrique et a une ouverture de fixation (13) dans laquelle pénètre l'une des extrémités du tube de liaison (36) auquel est reliée l'armature (12).

7. Soupape selon la revendication 1, caractérisée en ce que l'organe de fermeture de soupape (14) est en forme de sphère et est relié à l'autre extrémité du tube de liaison (36).

EP 0 358 922 B1

FIG. 1

6

FIG. 2

FIG. 5

FIG. 3

FIG. 6

FIG. 4